# EUROPÄISCHE PATENTANMELDUNG

(11) **EP 0 653 316 A1**
(43) Veröffentlichungstag der Anmeldung: **17.05.1995**
(21) Anmeldenummer: 94114630.0
(22) Anmeldetag: 16.09.1994
(51) Int. Cl.: B60B 37/10, B60B 5/02

(54) **Gleitrolle**

(30) Priorität: 15.11.1993 DE 9317464 U
(71) Anmelder: LIEBHERR-HAUSGERÄTE GMBH, D-88416 Ochsenhausen (DE)
(72) Erfinder: Döbler, Roland, D-88437 Maselheim (DE)
(74) Vertreter: Gossel, Hans K., Dipl.-Ing.

(57) **Zusammenfassung**

Zum einfacheren Bewegen von Geräten oder Behältern (1) sind an deren Bodenbereichen jeweils paarweise Gleitrollen (2) angebracht. Eine wirtschaftlich herstellbare Gleitrolle von großer Tragkraft dieser Art besteht aus einer mit einer Bodenkonstruktion verbundenen Abschnitt einer Scheibe, deren kufenartige Umfangsfläche (12) gegen den Untergrund weist und von einer reißscheibenförmigen Hohlrolle (14) eingefaßt ist, deren innere Seite durch einen eingezogenen, ringscheibenförmigen Rand gebildet ist. Der Scheibenabschnitt (9) ist zwischen der Außenwand und dem ringscheibenförmigen Rand der Hohlrolle gehalten und stützt sich mit seiner Umfangsfläche auf der inneren, zylindrischen Umfangsfläche der Hohlrolle ab, wobei die beiden Umfangsflächen etwa gleiche Krümmungsradien aufweisen.

## Beschreibung

Die Erfindung betrifft eine Gleitrolle, die paarweise im Bodenbereich eines Gerätes, Behälters o. dgl. angebracht ist.

Insbesondere im Haushaltsbereich besteht das Bedürfnis, Geräte, schwerere Behälter o. dgl. über kürzere Strecke transportieren oder versetzen zu müssen. Beispielsweise haben schon Haushaltskühlgeräte ein erhebliches Gewicht, so daß deren Transport oder Versetzen Schwierigkeiten bereitet, wenn keine Personen oder Arbeitskräfte zur Verfügung stehen, die mit geeigneten Ausrüstungen zum Anheben der Geräte o. dgl. ausgestattet sind.

Aufgabe der Erfindung ist es daher, eine einfache und kostengünstig herstellbare Gleitrolle zu schaffen, die sich in einfacher und wirtschaftlicher Weise derart mit einem Gerät, Behälter o. dgl. verbinden läßt, daß sich diese auch von schwächeren Personen über kürzere Strecken transportieren oder versetzen lassen.

Erfindungsgemäß wird diese Aufgabe dadurch gelöst, daß mit einer Bodenkonstruktion, beispielsweise einer Bodenplatte, einem Grundrahmen oder einem den Bodenbereich aussteifenden oder verstärkenden Träger oder einer Achse, ein Abschnitt einer Scheibe derart verbunden ist, daß deren kufenartige Umfangsfläche gegen den Untergrund weist, daß der Scheibenabschnitt von einer kreisscheibenförmigen Hohlrolle eingefaßt ist, deren innere Seite durch einen eingezogenen, ringscheibenförmigen Rand gebildet ist, und daß der Scheibenabschnitt zwischen der Außenwand und dem ringscheibenförmigen Rand der Hohlrolle gehalten ist und sich mit seiner Umfangsfläche auf der inneren, zylindrischen Umfangsfläche der Hohlrolle abstützt, wobei die beiden Umfangsflächen etwa gleiche Krümmungsradien aufweisen. Die erfindungsgemäß verwendete Gleitrolle weist bei einer leichten und daher wirtschaftlich herstellbaren Bauweise eine große Tragkraft auf, weil die von der Hohlrolle auf den das Tragteil bildenden Scheibenabschnitt übertragene Stützkraft großflächig auf die kufenartige Umfangsfläche des Scheibenabschnitts übertragen wird, so daß sich zwischen der Umfangsfläche des Scheibenabschnitts und der Hohlrolle nur geringe Drücke ausbilden. Da der Scheibenabschnitt taschenartig von dem entsprechenden unteren Abschnitt der Hohlrolle eingefaßt wird, läßt sich das von der Gleitrolle getragene Gerät o. dgl. problemlos auch quer zur Laufrichtung der Gleitrolle verschieben, weil die Gleitrolle mit genügender Stabilität an dem Scheibenabschnitt gehaltert ist.

Grundsätzlich ist es nicht erforderlich, die Hohlrolle besonders an dem Scheibenabschnitt oder dem Halteteil des Scheibenabschnitts zu fixieren, weil der Scheibenabschnitt aufgrund des auf diesem ruhenden Gewichts des Gerätes o. dgl. sicher in seiner Halterung in der Hohlrolle gehalten ist. Zudem können die Abmessungen des Scheibenabschnitts so bemessen sein, daß sich dieser nur mit einer gewissen Pressung in den von dem ringförmigen Rand der Hohlrolle begrenzten Ausschnitt einschieben läßt, so daß ein unbeabsichtigtes Abfallen der Hohlrolle von dem Scheibenabschnitt bei einem Kippen oder Anheben des Geräts vermieden ist.

Um ein unbeabsichtigtes Ablösen der Hohlrolle von dem Scheibenabschnitt mit Sicherheit zu verhindern, kann die äußere Wand der Hohlrolle mit einer Bohrung versehen sein, die ein in einer Bohrung des Scheibenabschnitts oder des Halteteils des Scheibenabschnitts gehalterter Stift durchsetzt, der im wesentlichen ein Abheben des Scheibenabschnitts von der inneren, zylindrischen Umfangsfläche der Hohlrolle verhindert.

Der Scheibenabschnitt kann unter Bildung einer Stufe einstückig mit dem Halteteil verbunden sein.

In weiterer Ausgestaltung der Erfindung ist vorgesehen, daß das Halteteil mit einem zylindrischen Ringabschnitt tragenden Rippen versehen ist, die den Scheibenabschnitt bilden. Auf diesen Ringabschnitt kann zusätzlich ein U-förmig profilierter Ringabschnitt aufgesetzt sein, dessen äußere Umfangsfläche die Gleitkufe des Scheibenabschnitts bildet. Dabei kann sich der U-förmig profilierte Ringabschnitt an dem Halteteil abstützen, so daß er aufgrund der Reibungskräfte von der Hohlrolle nicht in Umfangsrichtung verdreht wird.

Der Ringabschnitt kann mit einem stufenförmig abgesetzten Tragteil verbunden sein. Dabei kann die Verbindung in üblicher Weise durch Schrauben oder durch eine Steckverbindung bewirkt werden.

Nach einer bevorzugten Ausführungsform ist vorgesehen, daß an dem Ringabschnitt mehrere Rollen gelagert sind, deren Achsen sich auf einem zu der inneren, zylindrischen Umfangsfläche konzentrischen Kreisabschnitt befinden. Auf diese Weise wird eine wälzlagerähnliche, reibungsarme Abstützung der Hohlrolle auf den Scheibenabschnitt geschaffen.

Zweckmäßigerweise bestehen der Scheibenabschnitt und die Hohlrolle aus Kunststoffen, die miteinander einen geringen Reibungskoeffizienten besitzen.

Nach einer erfinderischen Weiterbildung ist vorgesehen, daß zwei Gleitrollen paarweise an dem hinteren unteren Ende eines Kühlgeräts angeordnet sind, so daß sich dieses nach Kippen wie eine Sackkarre verfahren läßt. Diese Ausgestaltung ermöglicht es auch schwächeren Personen, Kühlgeräte und andere Haushaltsgeräte in einfacher Weise zu transportieren und zu versetzen.

Die Gleitrollen können die Bodenfläche überragen und sich auf gleicher Höhe wie beispielsweise die Standflächen von an der vorderen Unterseite des Geräts angeordneten Stützfüßen befinden. Bei einer derartigen Anordnung werden die Gleitrollen ständig mit dem Gewicht des Gerätes belastet. Nach einer bevorzugten Ausführungsform ist vorgesehen, daß die unteren Scheitel der Gleitrollen die durch den Boden des Geräts aufgespannte Ebene gerade berühren oder höher liegen. Bei dieser Ausgestaltung werden die Gleitrollen nur dann von dem Gewicht des Geräts belastet, wenn dieses zum Zwecke des Transports gekippt wird.

Nach einer weiteren vorteilhaften Ausgestaltung der Erfindung ist vorgesehen, daß die Halteteile der Hohlrollen mit der Wanne oder dem Tragteil der Aggregateinheit des Kühlgeräts verbunden ist. Auf diese Weise sind die Gleitrollen in wirtschaftlicher Weise in den Aggregatteil des Kühlgeräts integriert.

Ausführungsbeispiele der Erfindung werden nachstehend anhand der Zeichnung näher erläutert. In dieser zeigen
- Fig. 1: ein Kühl- oder Gefriergerät in perspektivischer Ansicht,
- Fig. 2: eine ausschnittsweise Ansicht des hinteren unteren Eckbereichs des Kühlgeräts mit einer Gleitrolle,
- Fig. 3: einen Schnitt durch die Gleitrolle längs der Linie A-A in Fig. 2,

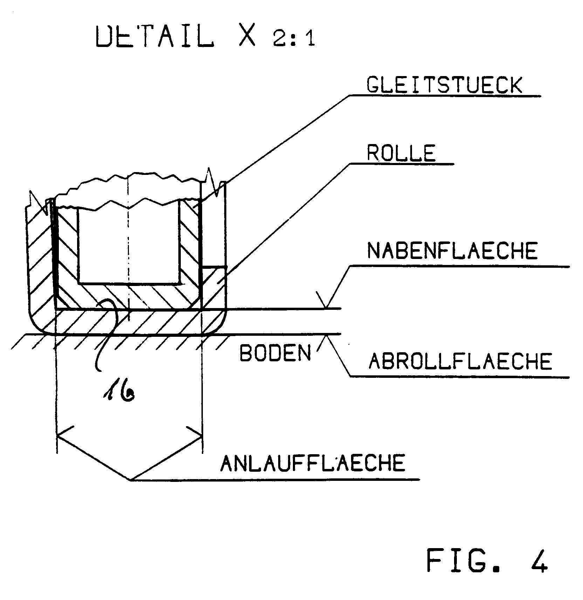

- Fig. 4: eine vergrößerte Darstellung des Bereichs X in Fig. 3,

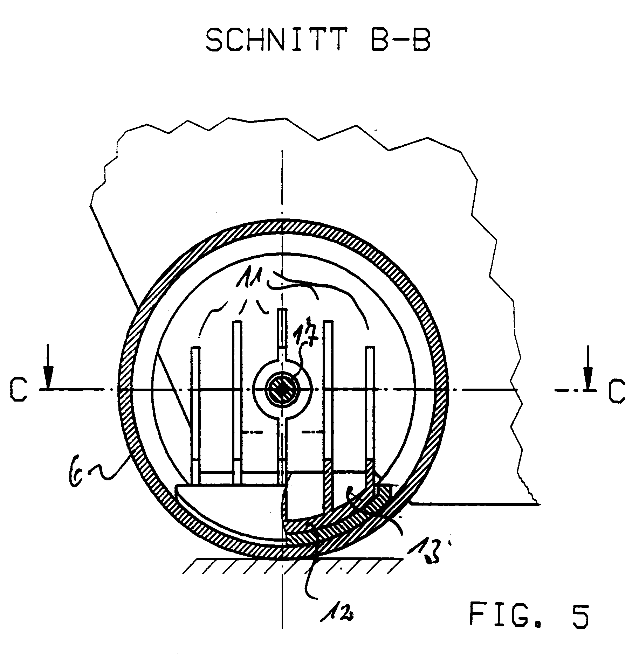

- Fig. 5: einen Schnitt durch die Gleitrolle längs der Linie B-B in Fig. 3,

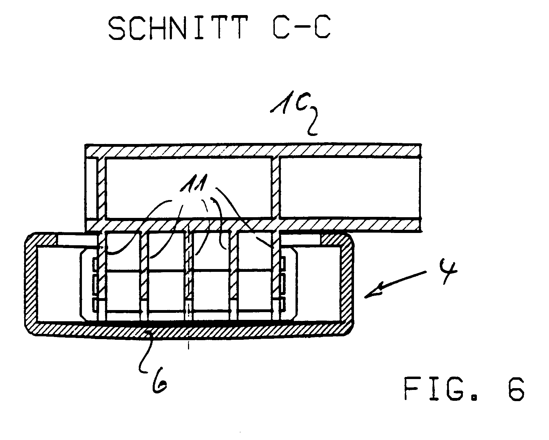

- Fig. 6: einen Schnitt durch die Gleitrolle längs der Linie C-C in Fig. 5,
- Fig. 7 - Fig. 11: Schnittdarstellungen der Gleitrolle und ihrer Halterung nach den Figuren 1 bis 6 während der Montage der Hohlrolle,
- Fig. 12: einen Radialschnitt durch eine Gleitrolle nach einer zweiten Ausführungsform,
- Fig. 13: einen Schnitt durch die Gleitrolle längs der Linie C-C in Fig. 12,
- Fig. 14: einen Radialschnitt durch eine dritte Ausführungsform einer Gleitrolle,
- Fig. 15: einen Schnitt durch die Gleitrolle längs der Linie C-C in Fig. 14,
- Fig. 16: einen Radialschnitt durch eine weitere Ausführungsform einer Gleitrolle während der Montage der Hohlrolle,
- Fig. 17: einen Schnitt durch eine weitere Ausführungsform einer Gleitrolle,
- Fig. 18: einen Radialschnitt durch die Gleitrolle nach Fig. 17,
- Fig. 19: einen Schnitt durch eine Gleitrolle, die unmittelbar an einem Träger, beispielsweise einem Rahmenblech, montiert ist,

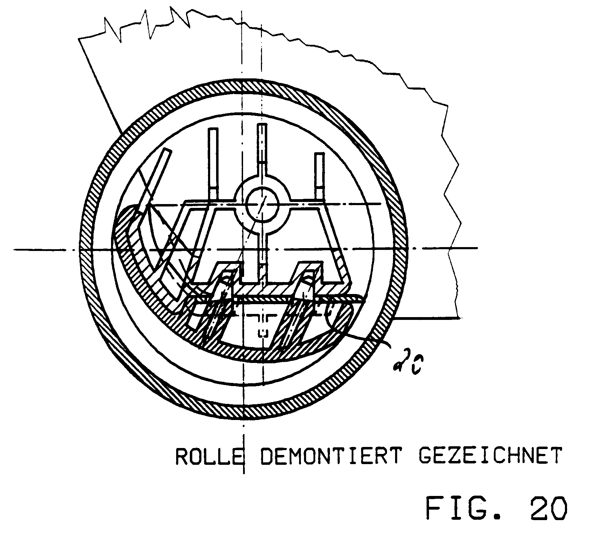

- Fig. 20: einen Radialschnitt durch eine Laufrolle während der Montage,
- Fig. 21: einen Schnitt durch eine Gleitrolle mit an dem Nabenteil gelagerten Laufrollen,
- Fig. 22: einen Radialschnitt durch die Laufrolle nach Fig. 21,
- Fig. 23: einen Schnitt durch eine Gleitrolle mit an dem Nabenteil gelagerten Rollen und
- Fig. 24: einen Radialschnitt durch die Gleitrolle nach Fig. 23.

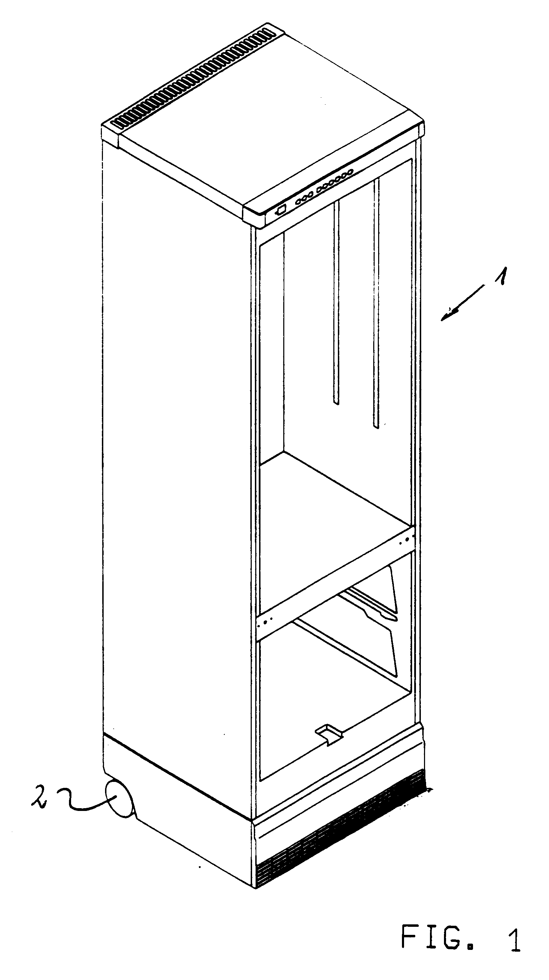

Aus Fig. 1 ist eine perspektivische Ansicht eines Haushaltskühlgerätes mit nichtmontierter Tür ersichtlich, dessen unterer Sockelteil in seinem hinteren unteren Bereich mit zwei Gleitrollen 2 versehen ist, die paarweise angeordnet sind. Das Kühlgerät 1 stützt sich somit auf dem unteren Sockelteil und den beiden hinteren Gleitrollen 2 ab. Soll das Kühlgerät transportiert oder versetzt werden, ist es lediglich erforderlich, dieses um die paarweise angeordneten Gleitrollen nach hinten zu kippen, so daß es sodann wie eine Sackkarre verfahren werden kann.

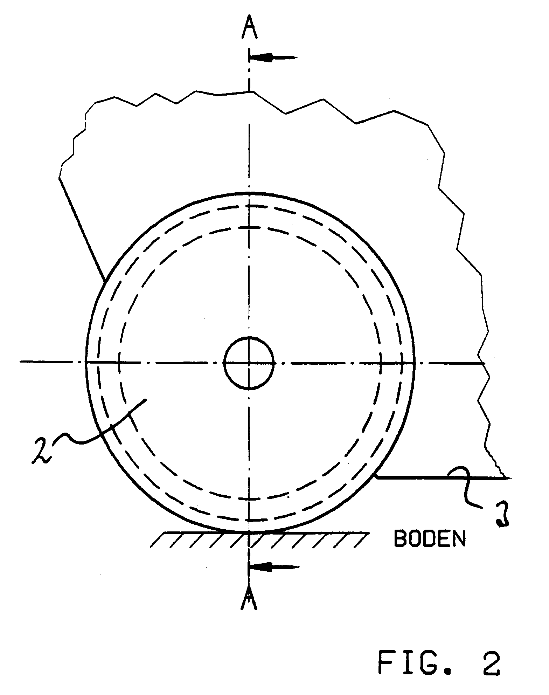

Wie aus Fig. 2 ersichtlich ist, ist die Gleitrolle 2 in einer Ausnehmung des Sockelteils gelagert. In dem dargestellten Ausführungsbeispiel überragt die Gleitrolle 2 die Bodenfläche 3 des Gerätes. Der vordere Geräteteil kann mit zwei Stützfüßen versehen sein, deren Höhe der Höhe entspricht, um die die Gleitrollen 2 die Bodenfläche 3 des Gerätes überragen.

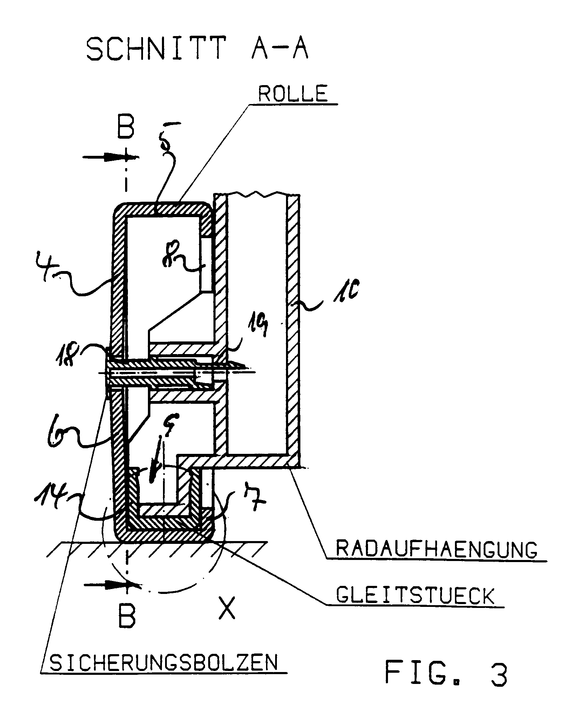

Die Gleitrolle besteht, wie aus Fig. 3 ersichtlich ist, aus einer Hohlrolle 4 mit einer zylindrischen Umfangsfläche 5 und einer kreisscheibenförmigen vorderen Wand 6, die leicht bombiert sein kann. Die innere Seite der Hohlrolle 4 ist durch einen ringscheibenförmigen Rand 7 gebildet, der einen kreisrunden Ausschnitt 8 begrenzt, die Hohlrolle 4 faßt einen scheibenabschnittförmigen Teil 9 ein, der einstückig mit einem Rahmen- oder Tragteil 10 des Gerätes verbunden ist und mit diesem einen stufenförmigen Absatz bildet.

In dem dargestellten Ausführungsbeispiel sind mit der Tragkonstruktion 10 Rippen 11 verbunden, die einstückig mit einer unteren, gekrümmten Leiste 12 ausgebildet sind. An die Rückseite der Stege 11 ist ein kreisabschnittförmiges Teil 13 angeformt. Die Stege 11, das Leistenteil 12 und das Teil 13 sind mit einem kappenförmigen Teil 14 verrastet, das diese mit seinen kreisabschnittförmigen Seitenteilen einfaßt und dessen untere Umfangsfläche eine kufenartige Gleitfläche bildet, die sich auf der inneren, zylindrischen Umfangsfläche 16 der Hohlrolle 5 abstützt. Die äußere, kreisscheibenförmige Wandung 6 der Hohlrolle 4 ist mit einer zentralen Bohrung versehen, die mit einer angespritzten Bohrung 17 in der mittleren Rippe 11 fluchtet. Durch die Bohrungen ist ein mit einem Kopf versehener Stift 18 eingeschoben, der zu seiner Halterung in der Tragkonstruktion mit einem angespritzten, federnden Haken 19 versehen ist. Auf diese Weise ist die Hohlrolle 4 auf dem scheibenabschnittförmigen Teil 9 lose gehalten.

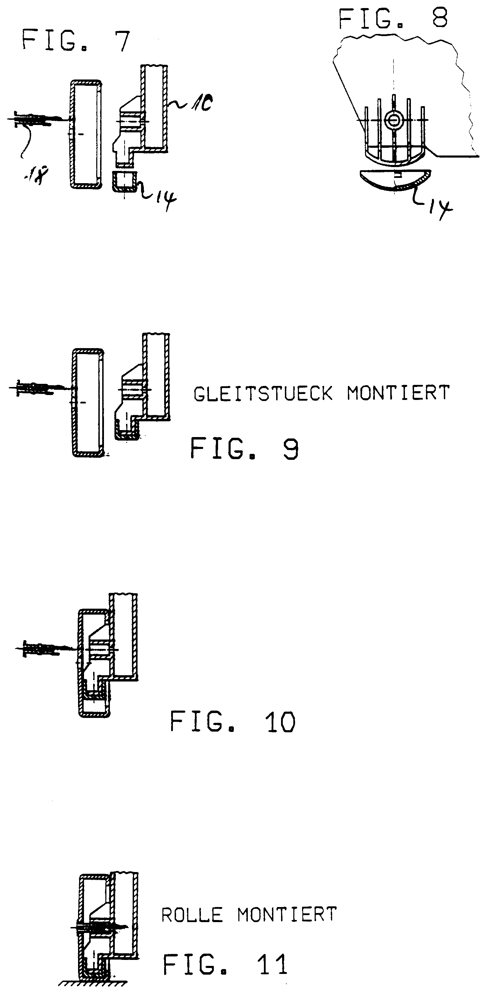

Wie aus den Figuren 7 bis 11 ersichtlich ist, wird zunächst das kappenartige Teil 14 auf den von den Rippen 11 getragenen scheibenabschnittförmigen Umfangsteil aufgesetzt. Anschließend wird das derart gebildete, eine Gleitkufe aufweisende Nabenteil durch den inneren, kreisscheibenförmigen Ausschnitt in das Hohlrad 4 eingesetzt, das sodann durch den Stift 18 lose an der Tragkonstruktion fixiert wird.

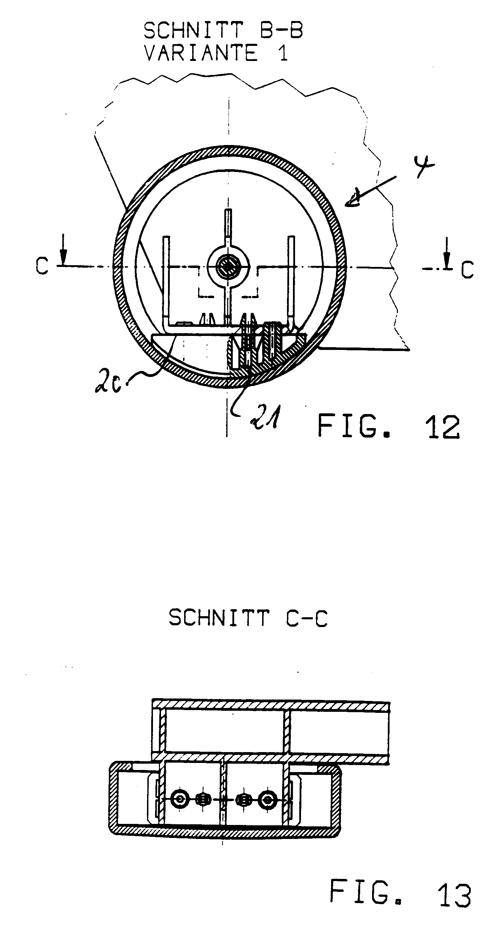

Bei dem Ausführungsbeispiel nach den Figuren 12 und 13 ist eine mit einer ebenen Stützfläche 20 versehene Tragkonstruktion vorgesehen, mit der durch angespritzte Haltestifte und Rastzapfen das scheibenabschnittförmige Teil 21 verbunden ist.

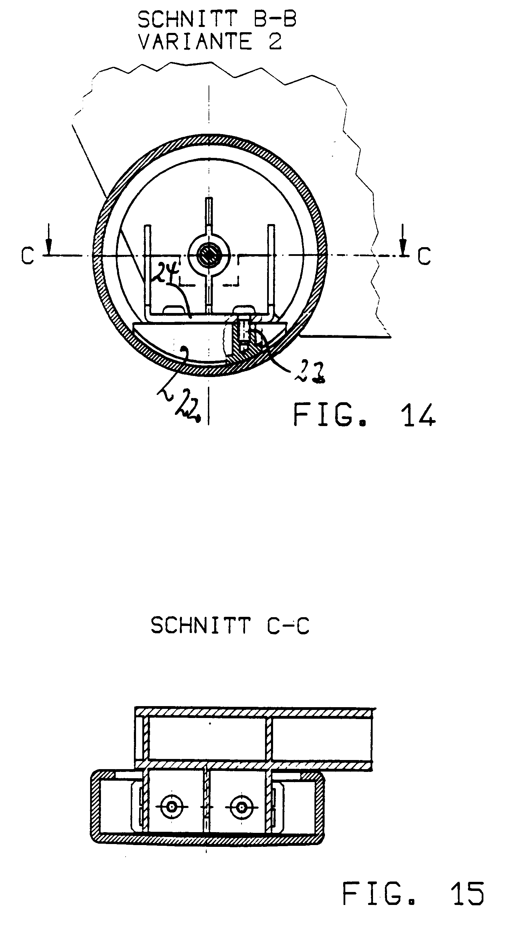

Bei dem Ausführungsbeispiel nach nach den Figuren 14 und 15 ist das scheibenabschnittförmige Nabenteil 22 durch Schrauben 23 mit dem Stützteil 24 verbunden.

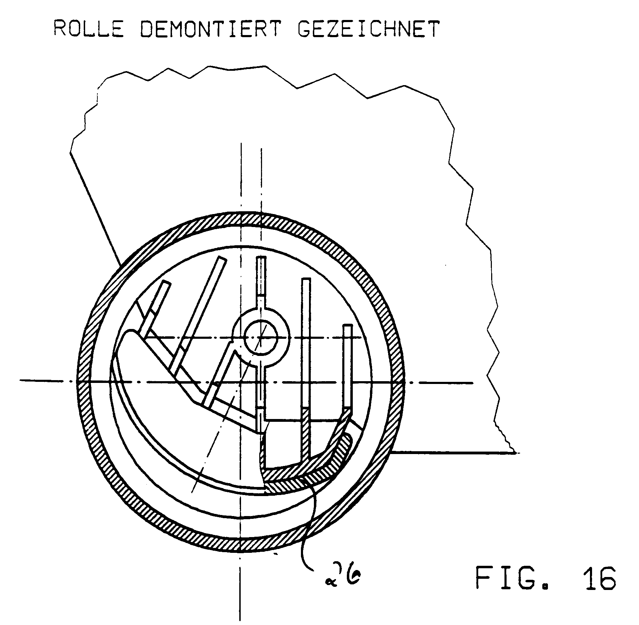

Aus Fig. 16 ist eine weitere Variante des scheibenabschnittförmigen Nabenteils ersichtlich. Die Breite des Nabenteils 26 ist so groß, daß dieses durch den inneren, kreisscheibenförmigen Ausschnitt des Hohlrades 4 geschoben werden kann.

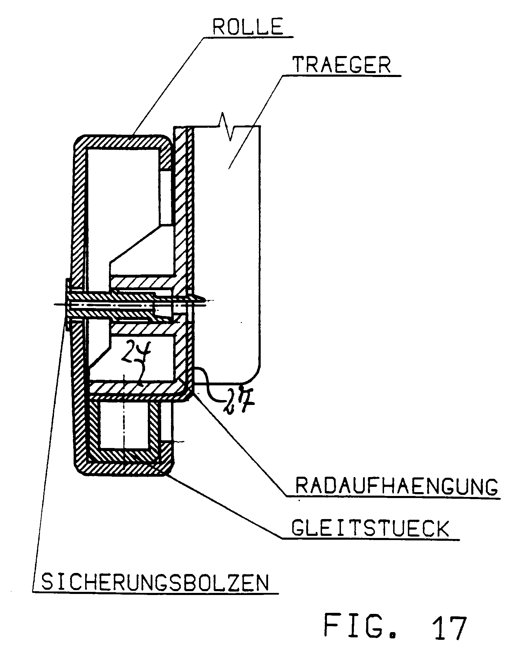

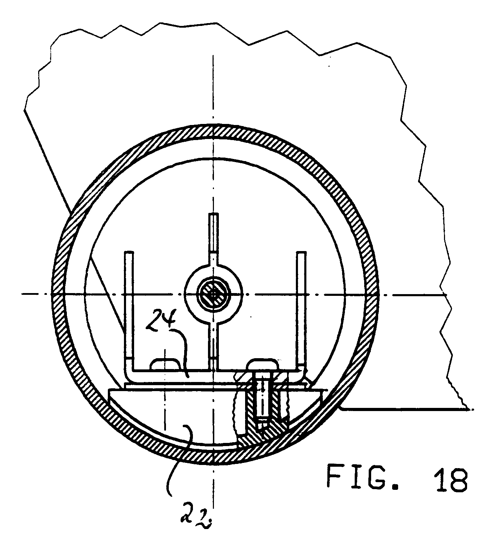

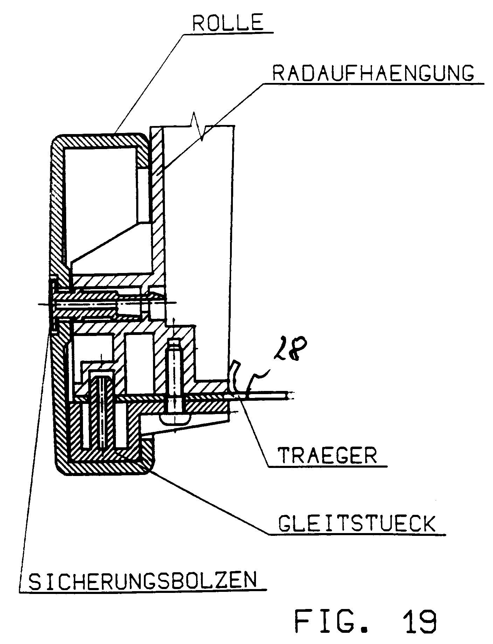

Bei den Ausführungsbeispielen nach den Figuren 17 und 18 ist zwischen dem Stützteil 24 der Tragkonstruktion und dem scheibenabschnittförmigen Nabenteil 22 ein Blechstreifen 27 der Tragkonstruktion angelegt. Dieser Blechstreifen kann, wie aus Fig. 19 ersichtlich ist, ein auskragender Träger 28 eines tragenden Bodenrahmens oder einer Wanne sein.

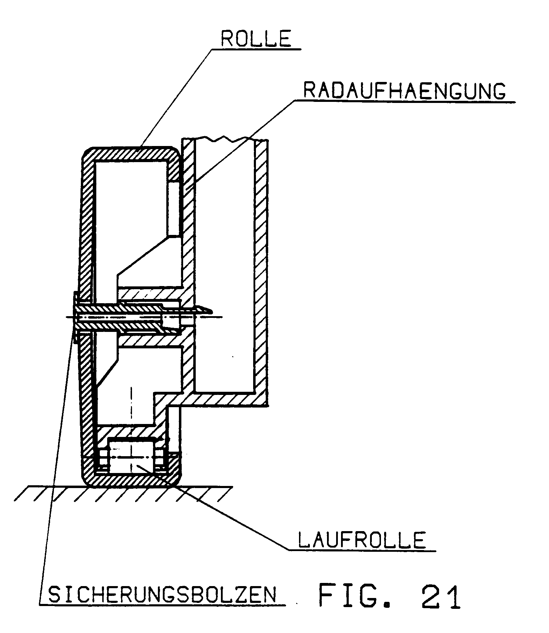

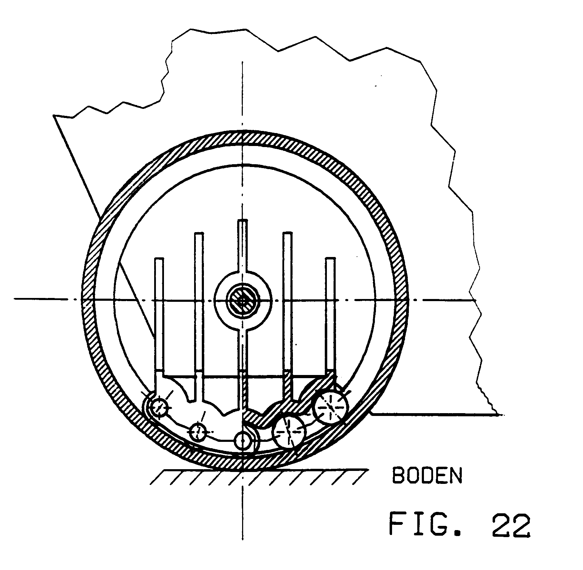

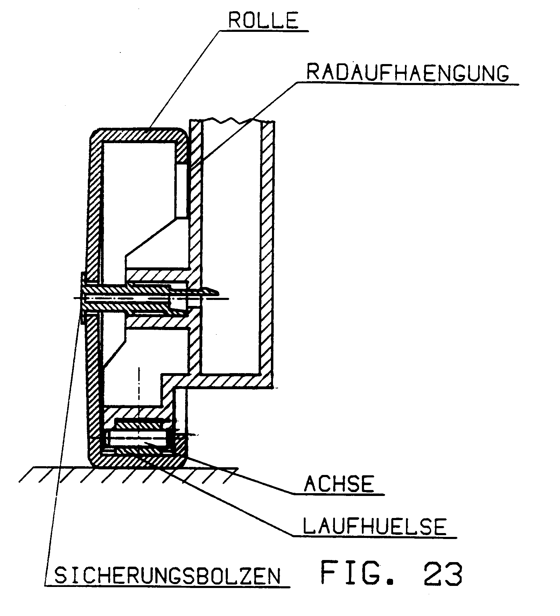

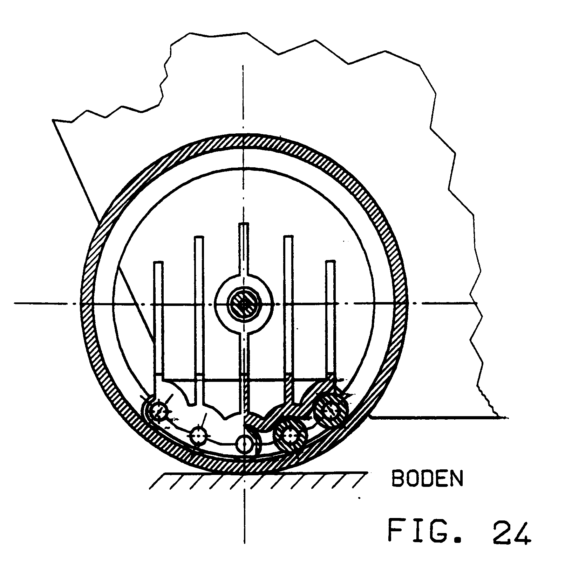

Bei den Ausführungsbeispielen nach den Figuren 21 bis 24 sind in dem Nabenteil Rollen gelagert, die die Reibung zwischen dem Nabenteil und der inneren, zylindrischen Umfangsfläche der Hohlrolle beträchtlich vermindern.

## Patentansprüche

1. Gleitrolle, die paarweise im Bodenbereich eines Gerätes, Behälters o. dgl. angebracht ist,
**dadurch gekennzeichnet,**
daß mit einer Bodenkonstruktion, beispielsweise einer Bodenplatte, einem Grundrahmen oder einem den Bodenbereich aussteifenden oder verstärkenden Träger oder einer Achse, ein Abschnitt einer Scheibe derart verbunden ist, daß deren kufenartige Umfangsfläche gegen den Untergrund weist, daß der Scheibenabschnitt von einer kreisscheibenförmigen Hohlrolle eingefaßt ist, deren innere Seite durch einen eingezogenen, ringscheibenförmigen Rand gebildet ist, und daß der Scheibenabschnitt zwischen der Außenwand und dem ringscheibenförmigen Rand der Hohlrolle gehalten ist und sich mit seiner Umfangsfläche auf der inneren, zylindrischen Umfangsfläche der Hohlrolle abstützt, wobei die beiden Umfangsflächen etwa gleiche Krümmungsradien aufweisen.

2. Gleitrolle nach Anspruch 1, dadurch gekennzeichnet, daß die äußere, scheibenförmige Wand der Hohlrolle mit einer Bohrung versehen ist, die ein in einer Bohrung des Scheibenabschnitts oder des Halteteils des Scheibenabschnitts gehalterter Stift durchsetzt, der im wesentlichen ein Abheben des Scheibenabschnitts von der inneren, zylindrischen Umfangsfläche der Hohlrolle verhindert.

3. Gleitrolle nach Anspruch 1 oder 2, dadurch gekennzeichnet, daß der Scheibenabschnitt unter Bildung einer Stufe einstückig mit dem Halteteil verbunden ist.

4. Gleitrolle nach einem der Ansprüche 1 bis 3, dadurch gekennzeichnet, daß das Halteteil mit einem zylindrischen Ringabschnitt tragenden Rippen versehen ist, die den Scheibenabschnitt bilden.

5. Gleitrolle nach Anspruch 4, dadurch gekennzeichnet, daß auf den Ringabschnitt ein U-förmig profilierter Kappenteil aufgesetzt ist.

6. Gleitrolle nach einem der Ansprüche 1 bis 5, dadurch gekennzeichnet, daß der Ringabschnitt mit einem stufenförmig abgesetzten Tragteil verbunden ist.

7. Gleitrolle nach einem der Ansprüche 1 bis 6, dadurch gekennzeichnet, daß an den Ringabschnitt mehrere Rollen gelagert sind, deren Achsen sich auf einem zu der inneren, zylindrischen Umfangsfläche konzentrischen Kreisabschnitt befinden.

8. Gleitrolle nach einem der Ansprüche 1 bis 7, dadurch gekennzeichnet, daß der Scheibenabschnitt und die Hohlrolle aus Kunststoffen bestehen, die miteinander einen geringen Reibungskoeffizienten besitzen.

9. Gleitrolle nach einem der Ansprüche 1 bis 8, dadurch gekennzeichnet, daß zwei Gleitrollen paarweise an dem hinteren unteren Ende eines Kühlgerätes angeordnet sind, so daß dieses nach Kippen wie eine Sackkarre verfahrbar ist.

10. Gleitrolle nach Anspruch 9, dadurch gekennzeichnet, daß die unteren Scheitel der Gleitrolle die durch den Boden des Gerätes aufgespannte Ebene gerade berühren oder höher liegen.

11. Gleitrolle nach Anspruch 9 oder 10, dadurch gekennzeichnet, daß die Halteteile der Hohlrolle mit der Wanne oder dem Tragteil der Aggregateinheit des Kühlgeräts verbunden sind.
